# EUROPEAN PATENT APPLICATION

(11) **EP 2 537 631 A1**
(43) Date of publication of application: **26.12.2012**
(21) Application number: 11742342.6
(22) Date of filing: 14.02.2011
(51) Int. Cl.: B23Q 15/18, B23Q 17/00, G05B 19/404

(54) **MACHINE TOOL THERMAL DISPLACEMENT CORRECTION METHOD AND THERMAL DISPLACEMENT CORRECTION DEVICE**

(30) Priority: 15.02.2010 JP 2010030037
(71) Applicant: JTEKT Corporation, Osaka-shi, Osaka 542-8502 (JP)
(72) Inventor: ONISHI, Kimihiro, Osaka-shi Osaka 542-8502 (JP)
(74) Representative: TBK
(86) International application number: PCT/JP2011/053019
(87) International publication number: WO 2011/099599

(57) **Abstract**

An inspection point positional information acquisition step (60) of acquiring thermal displacement positions of at least three inspection points set on a support member (10); an approximate curve calculation step (52) of calculating an approximate curve C of a deformed shape of the support member (10) on the basis of the thermal displacement positions of the inspection points; a correction value calculation step (53) of calculating a correction value (Rz) for a command position of a movable member (20) on the basis of the command position and the approximate curve C; and a correction step (56) of correcting the command position of the movable member (20) using the correction value Rz, are provided.

## Description

### TECHNICAL FIELD

The invention relates to a thermal displacement correction method and thermal displacement correction device for a machine tool.

### BACKGROUND ART

A machine tool uses a control device to control the positions of drive axes to thereby machine a workpiece. In machining using the machine tool, a support member that supports a movable member may thermally deform because of a thermal effect on the machine tool. The thermal deformation of the support member influences the position of the movable member, so it may lead to a decrease in working accuracy. Then, for example, Patent Document 1 discloses a method of correcting a command position in a drive axis by measuring the inclination of a column with the use of a range sensor.

### PRIOR ART DOCUMENT

### PATENT DOCUMENT

Patent Document 1: Japanese Patent Application Publication No. 2009-184077

### SUMMARY OF THE INVENTION

### PROBLEM TO BE SOLVED BY THE INVENTION

An existing thermal displacement correction method is able to measure an inclination angle of the column in the case where the column is inclined at a set inclination angle from a proximal support portion. However, actually, the column is not inclined at a set inclination angle, so a thermal displacement deviation may occur even when the existing thermal displacement method is applied.

The invention is contemplated in view of the above problem, and it is an object of the invention to provide a thermal displacement correction method and thermal displacement correction device for a machine tool, that are able to perform thermal displacement correction with further high accuracy.

### MEANS FOR SOLVING THE PROBLEM

### Thermal Displacement Correction Method for Machine Tool

In order to solve the above problem, a feature of the configuration of the invention of a thermal displacement correction method for a machine tool according to claim 1 is as follows.
A thermal displacement correction method for a machine tool that includes a support member and a movable member that is movably supported by the support member and that moves with respect to the support member on the basis of a command position includes:
an inspection point positional information acquisition step of, after the support member is thermally deformed, acquiring thermal displacement positions of at least three inspection points set on the support member;
an approximate curve calculation step of calculating an approximate curve of a deformed shape of the support member after the support member is thermally deformed on the basis of the thermal displacement positions at the inspection points;
a correction value calculation step of calculating a correction value for the command position on the basis of the command position of the movable member and the approximate curve; and
a correction step of correcting the command position of the movable member using the correction value.

A feature of the configuration of the invention according to claim 2 is such that, in claim 1,
the inspection point positional information acquisition step includes:
an inclination variation acquisition step of acquiring inclination variations of thermally-displaced inclinations of the inspection points after the support member is thermally deformed with respect to reference inclinations of the inspection points before the support member is thermally deformed;
a thermal elongation acquisition step of acquiring thermal elongations that are thermally-displaced lengths of the support member from a reference position of the support member to the inspection points after the support member is thermally displaced with respect to reference lengths of the support member from the reference position to the inspection points before the support member is thermally deformed; and
a thermal displacement position calculation step of calculating the thermal displacement positions of the inspection points on the basis of the inclination variations and the thermal elongations at the inspection points.

A feature of the configuration of the invention according to claim 3 is such that, in claim 1,
the inspection point positional information acquisition step includes:
a thermally-displaced inclination acquisition step of acquiring thermally-displaced inclinations of the inspection points after the support member is thermally deformed;
a thermal elongation acquisition step of acquiring thermal elongations that are thermally-displaced lengths of the support member from a reference position of the support member to the inspection points after the support member is thermally displaced with respect to reference lengths of the support member from the reference position to the inspection points before the support member is thermally deformed; and
a thermal displacement position calculation step of presetting displacement trajectories of the inspection points from a state where the support member is not thermally deformed in accordance with thermal deformation of the support member and calculating the thermal displacement positions of the inspection points on the basis of the displacement trajectories and the acquired inclination variations.

A feature of the configuration of the invention according to claim 4 is such that, in claim 1, one of the inspection points set on the support member is a support point at which the support member is supported on a bed of the machine tool.

A feature of the configuration of the invention according to claim 5 is such that, in claim 2 or 3,
one of the inspection points set on the support member is a support point at which the support member is supported on a bed of the machine tool, and
in the inclination variation acquisition step, the inclination variation of the support point is acquired as a constant value.

A feature of the configuration of the invention according to claim 6 is such that, in any one of claims 2, 3 and 5, in the thermal elongation acquisition step, the thermal elongations are acquired on the basis of temperatures of the support member, measured by temperature sensors arranged at the inspection points.

A feature of the configuration of the invention according to claim 7 is such that, in any one of claims 2, 3 and 5, in the thermal elongation acquisition step, the thermal elongations are acquired on the basis of strain amounts of the support member, measured by strain sensors respectively arranged at the inspection points.

A feature of the configuration of the invention according to claim 8 is such that, in any one of claims 2, 3 and 5, in the thermal elongation acquisition step, the thermal elongations are acquired on the basis of distances to the inspection points, measured by range sensors arranged on a bed of the machine tool.

A feature of the configuration of the invention according to claim 9 is such that, in any one of claims 1 to 8, at least four or more of the inspection points are set on the support member.
A feature of the configuration of the invention according to claim 10 is such that, in any one of claims 1 to 9, in the correction value calculation step, a correction value for the command position in a drive axis vertical to a direction in which the movable member moves is calculated.
A feature of the configuration of the invention according to claim 11 is such that, in claim 10, in the correction value calculation step, a correction value for the command position in a drive axis parallel to the direction in which the movable member moves is further calculated.

A feature of the configuration of the invention according to claim 12 is such that, in any one of claims 1 to 11, a thermal effect on the machine tool is a thermal effect on a sliding face of the support member due to movement of the movable member. Thermal Displacement Correction Device for Machine Tool

In order to solve the above problem, a feature of the configuration of the invention of a thermal displacement correction device for a machine tool according to claim 13 is as follows.
A thermal displacement correction device for a machine tool, that includes a support member and a movable member that is movably supported by the support member and that moves with respect to the support member on the basis of a command position includes:
inspection point positional information acquisition means for, after the support member is thermally deformed, acquiring thermal displacement positions of at least three inspection points set on the support member;
approximate curve calculation means for calculating an approximate curve of a deformed shape of the support member after the support member is thermally deformed on the basis of the thermal displacement positions at the inspection points;
correction value calculation means for calculating a correction value for the command position on the basis of the command position of the movable member and the approximate curve; and
correction means for correcting the command position of the movable member using the correction value.

### ADVANTAGEOUS EFFECTS OF THE INVENTION

With the invention according to claim 1, the correction value calculated in the correction value calculation step is calculated from the command position of the movable member, corresponding to an approximate curve, by approximating a deformed shape at the time when the support member is thermally deformed because of a thermal effect to the curve. In addition, the support member that supports the movable member thermally expands and deforms because of a thermal effect, such as machining with the machine tool and a variation in environment temperature.

That is, the at least three inspection points set on the support member are displaced in accordance with thermal deformation of the support member due to a thermal effect. Then, in the invention, the deformed shape of the support member is obtained as a curved shape on the basis of the thermal displacement positions of the inspection points. By so doing, in comparison with the case where the deformed shape of the support member is obtained as a linear shape, it is possible to further accurately calculate a correction value corresponding to the command position of the movable member supported on the support member. Thus, it is possible to handle various displacement conditions due to a thermal effect on the machine tool and to perform thermal displacement correction with further high accuracy.

With the invention according to claim 2, the inspection point positional information acquisition step is configured to include the thermal displacement position calculation step in which the thermal displacement positions of the inspection points are calculated on the basis of inclination variations and thermal elongations. That is, in the inclination variation acquisition step, the inclination variations are calculated on the basis of differences between the reference inclinations of the inspection points, measured in an initial state before the support member is thermally deformed and thermally-displaced inclinations of the inspection points, measured in a deformed state after the support member is thermally deformed through machining with the machine tool. Here, the inclinations of the inspection points are, for example, measured by sensors, such as clinometers, arranged at the inspection points. In the inclination variation acquisition step, the inclination variations are acquired on the basis of the thus measured reference inclinations and thermally-displaced inclinations of the inspection points.

In addition, the support member that supports the movable member thermally expands and deforms because of a thermal effect, such as machining with the machine tool and a variation in environment temperature. At this time, the length of the thermally-expanded support member has changed by a thermal elongation based on a temperature due to the thermal effect and the coefficient of linear expansion of the material. Then, in the thermal elongation acquisition step, the thermal elongations are calculated on the basis of differences between the reference lengths from the reference position to the inspection points, measured in an initial state of the support member, and the thermally-displaced lengths from the reference position to the inspection points, measured in a deformed state of the support member. The thus calculated and acquired inclination variations and thermal elongations have occurred as the support member is thermally deformed because of a thermal effect on the machine tool.

In addition, in the thermal displacement position calculation step, the inclination variations are approximated to displacement angles that indicate what direction the inspection points are displaced. The displacement angles are angles made between a horizontal plane and straight lines that pass through inspection points before and after displacement, for example, when the inclinations are measured as inclinations with respect to the horizontal plane. Then, it is possible to calculate what direction and how much the inspection points are displaced in accordance with thermal deformation of the support member on the basis of the displacement angles (variations in inclinations) and the acquired thermal elongations of the inspection points. Then, with the above configuration, it is possible to calculate the thermal displacement positions of the inspection points further simply.

With the invention according to claim 3, the inspection point positional information acquisition step is configured to include the thermal displacement position calculation step in which the thermal displacement positions of the inspection points are calculated on the basis of displacement trajectories and thermally-displaced inclinations The displacement trajectories of the inspection points are trajectories of the inspection points that are displaced in accordance with thermal deformation of the support member. As described above, the thermal elongation of the support member varies with the coefficient of linear expansion of the material. Therefore, deformed shapes at peripheral portions around the set inspection points may be estimated by the thermal elongations that vary with the temperatures of those portions.

Then, the displacement trajectories of the inspection points in accordance with thermal deformation of the peripheral portions are prestored for thermal elongations. Then, in the inspection point positional information acquisition step, displacement trajectories corresponding to the thermal elongations acquired in the thermal elongation acquisition step are acquired. Here, the support member deforms in a curved shape because of a thermal effect, so the displacement trajectory of each inspection point also draws a curve similarly. Then, in the thermal displacement position calculation step, positions, to which the acquired thermally-displaced inclinations of the inspection points are tangent, on the acquired displacement trajectories are obtained, and the tangent points are calculated as the thermal displacement positions of the inspection points. By so doing, it is possible to calculate the thermal displacement positions of the inspection points with further high accuracy.

With the invention according to claim 4, one of the inspection points set on the support member is a support point at which the support member is supported on a bed of the machine tool. The support member is supported on the bed of the machine tool so as to be movable or not movable. That is, when the support member is deformed because of a thermal effect on the machine tool, the support member is thermally deformed with reference to the support point at which the support member is supported on the bed. Thus, the support point may be set as the inspection point that is not displaced because of a thermal effect. By so doing, in the inspection point positional information acquisition step, it is possible to easily acquire the thermal displacement position of the inspection point that is the support point.

With the invention according to claim 5, one of the inspection points set on the support member is a support point at which the support member is supported on a bed of the machine tool. Then, the thermally-displaced inclination at the support point is acquired as a constant value. As described above, when the support member is deformed, the support member is thermally deformed with reference to the support point at which the support member is supported on the bed. At this time, when the support member is thermally deformed in a curved shape, it may be assumed that the normal direction of the inspection point on the curve that is a deformed shape does not change before and after thermal deformation. By so doing, the thermally-displaced inclination at the inspection point that is the support point may be regarded as a constant value before and after the support member is thermally deformed. Thus, the inclination variation acquisition step or the thermally-displaced inclination acquisition step may omit measurement of the thermally-displaced inclination of the inspection point.

With the invention according to claim 6, the thermal elongation acquisition step is configured to detect the thermal elongations on the basis of temperatures of the support member, measured by temperature sensors arranged at the inspection points. In addition, the support member that supports the movable member thermally expands and deforms because of a thermal effect, such as machining with the machine tool and a variation in environment temperature. At this time, the length of the thermally-expanded support member has changed by a thermal elongation based on a temperature due to the thermal effect and the coefficient of linear expansion of the material. That is, thermal deformation of the support member is caused by thermal expansion of the support member due to a thermal effect on the machine tool. Then, the thermal elongation of the support member due to thermal deformation is a value based on a temperature and the coefficient of linear expansion of the material. Then, for example, in the thermal elongation acquisition step, the expansion characteristic of the support member against a temperature, such as the coefficient of linear expansion, is prestored. By so doing, the thermal elongations of the support member may be calculated on the basis of the temperatures measured by the temperature sensors arranged at the inspection points.

With the invention according to claim 7, the thermal elongation acquisition step is configured to detect the thermal elongations on the basis of strain amounts of the support member, measured by strain sensors arranged at the inspection points. The strain sensors may be, for example, strain gauges of which the internal resistance values vary as the support member elongates or contracts and that measure strain amounts on the basis of the variations in the resistance values. Then, in the thermal elongation acquisition step, strain amounts resulting from thermal deformation of the support member are measured, and the thermal elongations of the support member may be detected on the basis of the strain amounts.

With the invention according to claim 8, the thermal elongation acquisition step is configured to detect the thermal elongations on the basis of distances to the inspection points, measured by range sensors arranged on a bed of the machine tool. When the support member is deformed because of a thermal effect on the machine tool, the support member thermally deforms with reference to the bed on which the support member is supported. That is, distances to the displaced inspection points are measured by the range sensors arranged on the reference bed to thereby make it possible to detect the thermal elongations of the support member before and after thermal deformation.

With the invention according to claim 9, at least four or more of the inspection points are set on the support member. In the approximate curve calculation step, because the support member thermally deforms in a curved shape, the approximate curve is calculated on the basis of the thermal displacement positions of the at least three inspection points. In addition, when the approximate curve calculation step is, for example, configured to calculate the approximate curve through the method of least squares, or the like, the approximate curve formed of a curve of the second order may be calculated on the basis of the four or more thermal displacement positions. By so doing, the approximate curve that is further approximated to the deformed shape of the support member may be calculated. Thus, an appropriate correction value may be calculated, so it is possible to perform thermal displacement correction with further high accuracy.

With the invention according to claim 10, the correction value calculation step is configured to calculate a correction value for the command position in a drive axis vertical to a direction in which the movable member moves. When the support member that supports the movable member is deformed because of a thermal effect, the support member may be thermally deformed such that the direction in which the movable member moves is curved. In such a case, with the above configuration, in the correction step, the drive axis perpendicular to a drive axis along which the movable member is driven is set as a correction target, and the command position along that drive axis may be corrected. In this way, by incorporating the correction value, it is possible to perform appropriate thermal displacement correction.

With the invention according to claim 11, the correction value calculation step is configured to further calculate a correction value in a drive axis parallel to the direction in which the movable member moves. As described above, when the support member is thermally deformed such that the direction in which the movable member moves is curved, it may be required to also correct the command position of the movable member. In such a case, with the above configuration, in the correction step, the drive axis parallel to the direction in which the movable member moves, that is, a drive axis along which the movable member is driven, is set as a correction target, and the command position along that drive axis may be corrected. In this way, by incorporating the correction value, it is possible to perform appropriate thermal displacement correction.

With the invention according to claim 12, a thermal effect on the machine tool is a thermal effect on a sliding face of the support member due to movement of the movable member. The support member thermally expands and deforms because of a thermal effect, such as machining with the machine tool and a variation in environment temperature. Particularly, heat generation resulting from movement of the movable member supported by the support member significantly influences thermal deformation of the support member. Then, it is assumed that a thermal effect on the machine tool may be a thermal effect on the sliding face of the support member on which the movable member moves. By so doing, the deformed shape of the support member may be approximated to a curve using the sliding face. Thus, a correction value intended for the sliding face is calculated to make it possible to perform further appropriate thermal displacement correction.

With the invention according to claim 13, the correction value calculated in the correction value calculation means is calculated from the command position of the movable member, corresponding to an approximate curve, by approximating a deformed shape at the time when the support member is thermally deformed because of a thermal effect to the curve. In addition, the support member that supports the movable member thermally expands and deforms because of a thermal effect, such as machining with the machine tool and a variation in environment temperature.

That is, the at least three inspection points set on the support member are displaced in accordance with thermal deformation of the support member due to a thermal effect. Then, in the invention, the deformed shape of the support member is obtained as a curved shape on the basis of the thermal displacement positions of the inspection points. By so doing, in comparison with the case where the deformed shape of the support member is obtained as a linear shape, a correction value corresponding to the command position of the movable member supported on the support member may be further accurately calculated. Thus, it is possible to handle various displacement conditions due to a thermal effect on the machine tool and to perform thermal displacement correction with further high accuracy.

In addition, the other features of the thermal displacement correction method for a machine tool according to the invention may be similarly applied to the thermal displacement correction device for a machine tool according to the invention. Then, for advantageous effects in this case as well, similar advantageous effects to those of the thermal displacement correction method for a machine tool are obtained.

### BRIEF DESCRIPTION OF THE DRAWINGS

[FIG. 1] FIG. 1 is an overall view of a machine tool 1 according to a first embodiment.
[FIG. 2] FIG. 2 is a block diagram that shows a thermal displacement correction device 50.
[FIG. 3] FIG. 3 is a side view that shows a state where a column 10 is deformed.
[FIG. 4] FIG. 4 is an explanatory view of calculation of correction values.
[FIG. 5] FIG. 5 is a partially enlarged view of FIG. 4.
[FIG. 6] FIG. 6 is a block diagram that shows a thermal displacement correction device 150 according to a second embodiment.
[FIG. 7] FIG. 7 is an explanatory view of calculation of correction values.
[FIG. 8] FIG. 8 is a partially enlarged view of FIG. 7.

### MODES FOR CARRYING OUT THE INVENTION

Hereinafter, specific embodiments of the thermal displacement correction method and thermal displacement correction device for a machine tool according to the invention will be described with reference to the drawings. Description will be made by taking a three-axis machining center as a machine tool, for example. That is, the machine tool is a machine tool that has three linear axes (X, Y and Z axes) perpendicular to one another as drive axes.

### First Embodiment

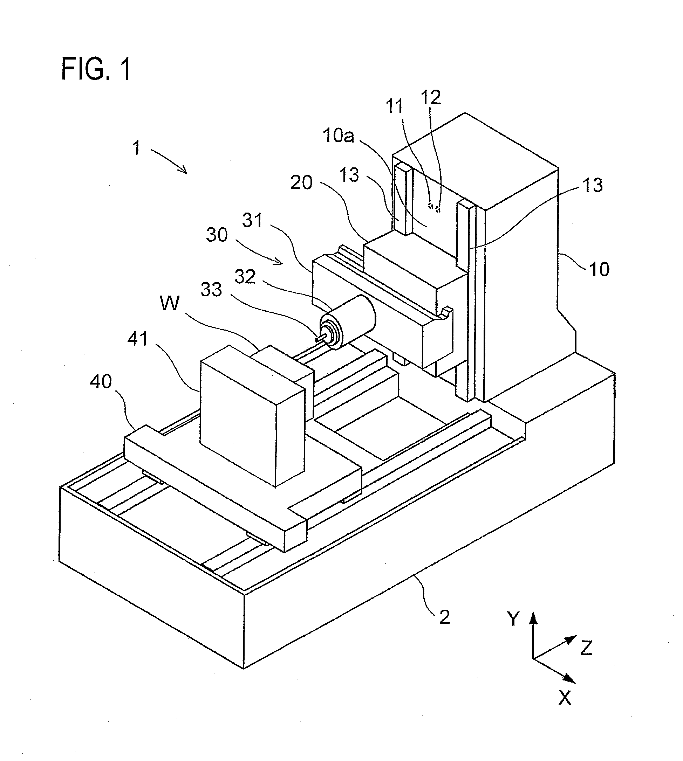

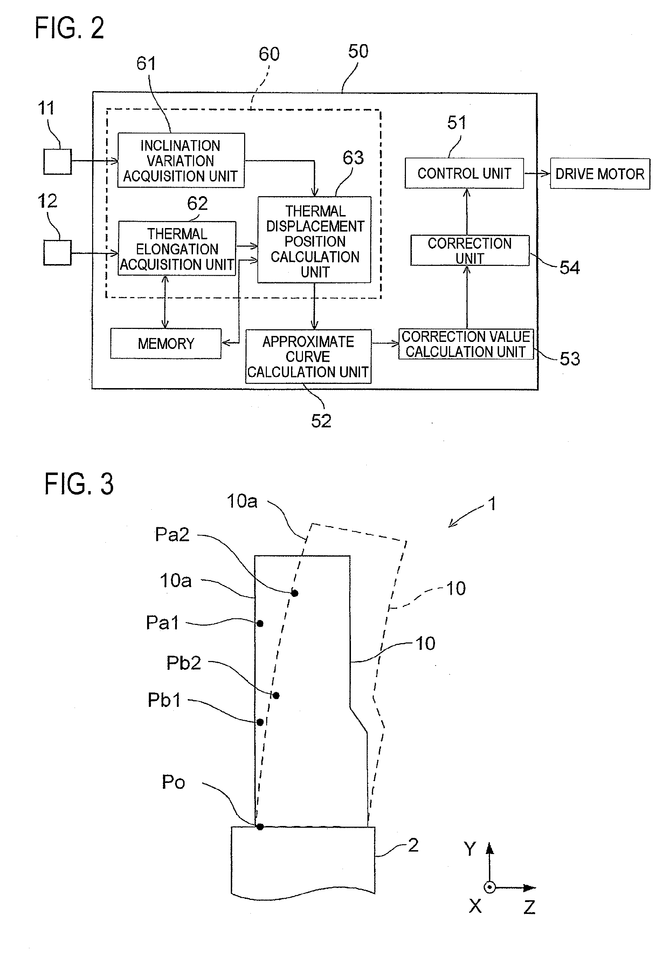

A thermal displacement correction device for a machine tool 1 according to a first embodiment will be described with reference to FIG. 1 to FIG. 3. FIG. 1 is an overall view of the machine tool 1. FIG. 2 is a block diagram that shows the thermal displacement correction device. FIG. 3 is a side view that shows a state where a column is deformed.

### Configuration of Machine Tool 1

As shown in FIG. 1, the machine tool 1 includes a bed 2, a column 10 (that corresponds to a "support member" according to the invention), a saddle 20 (that corresponds to a "movable member" according to the invention), a headstock 30, a table 40 and a numerical control device 50 (that corresponds to a "thermal displacement correction device" according to the invention). Rails are formed on the upper face of the bed 2 in a Z axis direction (direction parallel to a floor surface). The bed 2 is installed on the floor surface. A workpiece W is a machined member that is machined by the machine tool 1.

The column 10 is a support member that is fixed on the upper face of the bed 2 so as to be upright. The column 10 supports the saddle 20. The column 10 deforms because of a thermal effect, such as machining with the machine tool 1 and a variation in environment temperature, so the thermal displacement correction device sets a thermal displacement of the saddle 20 in accordance with thermal deformation of the column 10 as a correction target. Then, in the present embodiment, as shown in FIG. 3, three inspection points Pa1, Pb1 and Po are set on the column 10, and then thermal displacement correction is performed on the basis of displacement points Pa2, Pb2 and Po that are thermal displacement positions of the inspection points as the column 10 is thermally deformed.

The first inspection point Pa1 and the second inspection point Pb1 are respectively set near the upper portion and center portion of the column 10 in a Y axis direction (direction vertical to the floor surface). In addition, the reference inspection point Po is set at a support point at which the column 10 is supported on the bed 2 at the lower portion of the column 10 in the Y axis direction. The details of setting the inspection points and thermal displacement correction will be described later.

In addition, the column 10 has a plurality of clinometers 11 and a plurality of temperature sensors 12 inside and has rails 13 in order to perform thermal displacement correction. The clinometers 11 are respectively installed at two portions inside the column 10. The two portions respectively correspond to the inspection points Pa1 and Pb2 set on the column 10. The clinometers 11 each detect the inclination angle of the column 10 at each installation portion, and outputs a signal corresponding to the inclination angle to the numerical control device 70 (described later).

The temperature sensors 12 are respectively set at three portions inside the column 10. The three portions respectively correspond to the arrangement portions of the clinometers 11 and the reference inspection point Po set on the column 10. The temperature sensors 12 each detect the temperature of the column 10 at each installation portion, and outputs a signal corresponding to the temperature to the numerical control device 70.

The rails 13 are formed so as to extend in the Y axis direction on the side face of the column 10. The saddle 20 is a movable member that is provided on the rails 13 of the column 10 and that is movable in the Y axis direction with respect to the column 10. The saddle 20 slides in the Y axis direction as a Y-axis motor (not shown) fixed to the column 10 is driven for rotation. In the present embodiment, the side face of the column 10, on which the Y-axis rails 13 are formed, is set as a sliding face 10a of the column 10, on which the saddle 20 slides. In addition, the saddle 20 has a guide groove in an X axis direction (direction parallel to the floor surface) on its side face.

The headstock 30 is a slide that has a spindle head 31, a rotary spindle 32 and a tool 33 and that is movable in the X axis direction with respect to the saddle 20. The spindle head 31 has an X-axis rail, and is slidably fitted to the guide groove of the saddle 20. Then, the spindle head 31 moves the entire headstock 30 in the X axis direction as an X-axis motor (not shown) fixed to the saddle 20 is driven for rotation.

The rotary spindle 32 is provided so as to be rotatable by a spindle motor accommodated in the housing of the spindle head 31, and supports the tool 33. The tool 33 is fixed to the distal end of the rotary spindle 32 of the headstock 30. That is, the tool 33 rotates with the rotation of the rotary spindle 32. Note that the tool 33 is, for example, a drill, a tap, or the like. That is, the machine tool 1 that is the three-axis machining center is configured such that the tool 33 is movable in the X axis direction and the Y axis direction with respect to the bed 2. Then, the machine tool 1 is configured such that the workpiece W is movable in the Z axis direction.

The table 40 is a slide that is provided on the Z-axis rails of the bed 2 and that is movable in the Z axis direction with respect to the bed 2. The table 40 moves in the Z axis direction as a Z-axis motor (not shown) fixed to the bed 2 is driven for rotation. In addition, a jig 41 is provided on the table 40. The jig 41 fixes the workpiece W at a predetermined position.

By so doing, the workpiece W moves in the Z axis direction with respect to the bed 2 as the table 40 moves in the Z axis direction. In the above machine tool 1, the saddle 20, the headstock 30 and the table 40 are controlled on the basis of command positions from the control device 50 so as to move to the command positions. By so doing, the tool 33 is relatively moved with respect to the workpiece W to machine the workpiece W.

The control device 50 controls the axis motors and the spindle motor on the basis of NC data. In addition, the control device 50 is the thermal displacement correction device that corrects a thermal displacement of each portion of the column 10 due to a thermal effect on the machine tool 1. Hereinafter, the configuration of a characterizing portion of the invention in the control device 50 of the machine tool 1 will be described.

As shown in FIG. 2, the control device 50 has a control unit 51, an approximate curve calculation unit 52, a correction value calculation unit 53, a correction unit 54 and an inspection point positional information acquisition unit 60. Here, the control unit 51, the approximate curve calculation unit 52, the correction value calculation unit 53, the correction unit 54 and the inspection point positional information acquisition unit 60 may be respectively formed of individual pieces of hardware or may be respectively implemented by pieces of software.

The control unit 51 controls the axis motors, the spindle motor, and the like, on the basis of input NC data. By so doing, the control device 50 controls the saddle 20, the headstock 30 and the table 40 such that the saddle 20, the headstock 30 and the table 40 move, and relatively moves the tool 33 driven for rotation with respect to the workpiece W to machine the workpiece W.

As described above, the control device 50 is the thermal displacement correction device that corrects a thermal displacement due to a thermal effect on the machine tool 1. That is, the control device 50 calculates correction values corresponding to a deformation of the column 10 due to a thermal effect on the machine tool 1, and then corrects control executed by the control unit 51 over the axis motors, and the like, on the basis of the correction values. Thus, high-accuracy machining is achieved. Hereinafter, the "control device 50" is also referred to as the "thermal displacement correction device 50".

The inspection point positional information acquisition unit 60 of the thermal displacement correction device 50 is inspection point positional information acquisition means for acquiring the displacement points Pa2, Pb2 and Po of the inspection points Pa1 Pb1 and Po set on the column 10 after the column 10 is thermally deformed. The inspection point positional information acquisition unit 60 has an inclination variation acquisition unit 61, a thermal elongation acquisition unit 62 and a thermal displacement position calculation unit 63.

The inclination variation acquisition unit 61 is inclination variation acquisition means for acquiring inclination variations of the inspection points Pa1, Pb1 and Po set at three portions on the column 10 before and after the column 10 that is the support member is thermally deformed. The inclination of the inspection point Pa1 set near the upper portion of the column 10 and the inclination of the inspection point Pb2 set near the center portion of the column 10 are respectively measured by the clinometers 11 set at the two portions.

By so doing, the inclination variation acquisition unit 61 measures the reference inclinations of the inspection points Pa1 and Pb1 before the column 10 is thermally deformed. In addition, the inclination variation acquisition unit 61 measures thermally-displaced inclinations of the inspection points Pa1 and Pb1 after the column 10 is thermally deformed. Then, the inclination variation acquisition unit 61 acquires the inclination variations of the inspection points Pa1 and Pb1 before and after thermal deformation of the column 10 due to a thermal effect on the machine tool 1 on the basis of the differences between the reference inclinations and the thermally-displaced inclinations.

Here, when the column 10 deforms because of a thermal effect on the machine tool 1, the column 10 thermally deforms with reference to the reference inspection point Po, that is, the support point at which the column 10 is supported on the bed 2. At this time, when the column 10 is thermally deformed in a curve shape, it may be assumed that the normal direction of the reference inspection point Po on the curve that is a deformed shape does not change before and after thermal deformation. By so doing, the thermally-displaced inclination at the reference inspection point Po set at the support point may be assumed to be equal to the reference inclination before the column 10 is thermally deformed. Then, the inclination variation acquisition unit 61 acquires the thermally-displaced inclination at the reference inspection point Po set at the support point as a constant value.

The thermal elongation acquisition unit 62 is thermal elongation acquisition means for detecting thermal elongations of the column 10 deformed because of a thermal effect on the machine tool 1. The thermal elongations are thermally-displaced lengths of the support member from the reference position of the column 10 to the inspection points after the column 10 is thermally deformed with respect to reference lengths of the column 10 from the reference position to the inspection points before the column 10 is thermally deformed. In addition, the reference position of the column 10 is set at the support point (reference inspection point Po).

Here, the column 10 that supports the saddle 20 that is the movable member thermally expands and deforms because of a thermal effect on the machine tool 1. At this time, the length of the thermally-expanded column 10 has changed by a thermal elongation based on a temperature due to the thermal effect and the coefficient of linear expansion of the material. That is, the thermal elongation of the column 10 due to thermal deformation is a value based on a temperature and the coefficient of linear expansion of the material. Then, the thermal elongation acquisition unit 62 acquires values calculated on the basis of temperatures measured at the inspection points Pa1 Pb1 and Po and the coefficient of linear expansion of the column 10 as thermal elongations. The expansion characteristic of the column 10 is the characteristic of the column 10 against a temperature, such as the coefficient of linear expansion prestored in the memory of the thermal displacement correction device 50.

The thermal displacement position calculation unit 63 is thermal displacement position calculation means for respectively calculating the thermal displacement positions of the inspection points in accordance with thermal deformation of the column 10 on the basis of the inclination variations and thermal elongations of the inspection points. The three inspection points Pa1 Pb1 and Po set on the column 10 are displaced in accordance with thermal deformation of the column 10 due to a thermal effect. By understanding the thermal displacement positions of the inspection points, it is possible to estimate the deformed shape of the column 10. Then, the thermal displacement position calculation unit 63 calculates the displacement points Pa2, Pb2 and Po that are the thermal displacement positions of the inspection points on the basis of the inclination variations and thermal elongations of the inspection points. The amounts of the inclination variations and thermal elongations vary in accordance with thermal deformation of the column 10.

Here, as described above, the column 10 thermally deforms with reference to the reference inspection point Po at the time when the column 10 deforms because of a thermal effect. Therefore, the displacement of the reference inspection point Po may be zero even when the column 10 is thermally deformed. Then, the thermal displacement position calculation unit 63 assumes the thermal displacement position of the reference inspection point Po through thermal deformation of the column 10 as the original reference inspection point Po. That is, the reference inspection point Po and the displacement point Po are the same position.

The approximate curve calculation unit 52 is approximate curve calculation means for calculating an approximate curve of the deformed shape of the column 10 after the column 10 is thermally deformed on the basis of the thermal displacement positions of the inspection points. Here, thermal displacement correction needs to accurately understand the deformed shape of the column 10 deformed because of a thermal effect on the machine tool 1 in order to perform correction using further appropriate correction values. In addition, because the column 10 is thermally deformed in a curved shape, the thermal displacement correction device 50 understands the deformed shape of the column 10 as an approximate curve. By so doing, the thermal displacement correction device 50 calculates further appropriate correction values. Then, the approximate curve calculation unit 52 calculates the approximate curve of the column 10 on the basis of the displacement points Pa2, Pb2 and Po calculated by the thermal displacement position calculation unit 63.

The correction value calculation unit 53 is correction value calculation means for calculating correction values to the command values of the saddle 20 on the basis of the command position of the saddle 20 that is the movable member and the approximate curve. The correction value calculation unit 53 calculates correction values on the basis of the command position of the saddle 20 based on the command values from the control device 50 and the approximate curve calculated by the approximate curve calculation unit 52. Here, the command values from the control device 50 are values that are output in order for the control unit 51 to control the axis motors on the basis of input NC data.

The correction unit 54 is correction means for correcting the command position of the saddle 20 using the calculated correction values. With the above configuration, for example, the Y-axis motor of the column 10 is controlled so as to be driven for rotation, and the saddle 20 that is the movable member moves to a predetermined command position. Then, the correction value calculation unit 53 associates the command position of the saddle 20 on the acquired approximate curve corresponding to the deformed shape of the column 10. By so doing, it is possible to estimate how much the portions of the column 10 at the command position are displaced through thermal deformation. That is, the correction unit 54 corrects the command position from the control device 50 using the correction values calculated by the correction value calculation unit 53 from the displacements of the above portions.

### Thermal Displacement Correction

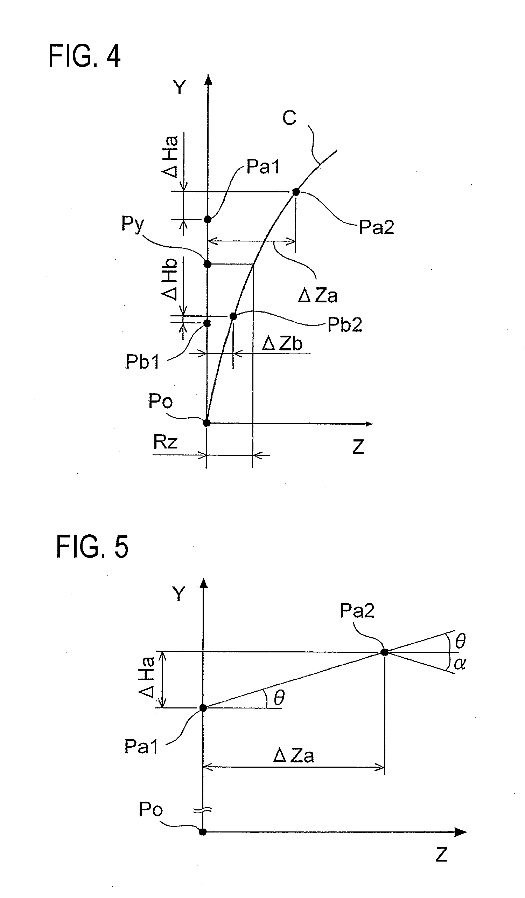

Hereinafter, thermal displacement correction over the machine tool 1 will be described with reference to FIG. 3 to FIG. 5. FIG. 4 is an explanatory view of calculation of correction values. FIG. 5 is a partially enlarged view of FIG. 4. In addition, thermal displacement correction in the present embodiment sets a thermal displacement of the saddle 20 in accordance with thermal deformation of the column 10 due to a thermal effect as a correction target. Then, for the sake of easy description, as shown in FIG. 3, it is assumed that the column 10 thermally deforms so as to warp back in the Z axis direction because of a thermal effect. In other words, within deformation of the column 10 due to a thermal effect, a thermal displacement associated with a deformed shape projected onto a Y-Z plane is set as a correction target. Thus, thermal displacement correction is to calculate a correction value in the drive axis (Z axis) vertical to the direction in which the saddle 20 that is the movable member moves (Y axis direction).

In addition, the column 10 thermally expands and deforms because of a thermal effect, such as machining with the machine tool 1 and a variation in environment temperature. Particularly, heat generation resulting from movement of the saddle 20 supported by the column 10 significantly influences deformation of the column 10. Then, it is assumed that a thermal effect on the machine tool 1 is a thermal effect on the sliding face 10a of the column 10 on which the saddle 20 moves. Thus, the inspection points are set on the plane of the sliding face 10a, and, in addition, an approximate curve C (described later) is obtained by approximating the deformed shape of the sliding face 10a to a curve.

First, setting of the inspection points will be described. The inspection points set on the column 10 are three portions, that is, a first inspection point Pa1, a second inspection point Pb1 and a reference inspection point Po. In the present embodiment, the inspection points are set at equal intervals and are set such that the distance from the uppermost first inspection point Pa1 to the upper end of the column 10 is about half the distance between the inspection points. That is, in the present embodiment, because the three inspection points are set, the first inspection point Pa1 and the second inspection point Pb1 are respectively set at the heights of about 80 percent and 40 percent with respect to the overall height of the column 10 from the bed 2. In addition, as described above, the reference inspection point Po is set at the support point at which the column 10 is supported on the bed 2.

Then, when the column 10 deforms because of a thermal effect, the inspection points are displaced in accordance with the thermal deformation as shown in FIG. 3. The thermal displacement positions of the first inspection point Pa1 and second inspection point Pb1 are respectively a first displacement point Pa2 and a second displacement point Pb2. In addition, because the displacement of the reference inspection point Po with respect to the bed 2 is zero, the displacement point Po is the same position. In addition, the temperature sensors 12 are respectively set at the inspection points, and, furthermore, the clinometers 11 are respectively set at the first inspection point Pa1 and the second inspection point Pb1. By so doing, the inclination and temperature of each inspection point before and after the column 10 is thermally deformed are measured.

It is assumed that, while machining is performed by the machine tool 1, the saddle 20 repeats movement in the Y axis direction with respect to the column 10 to cause the sliding face 10a of the column 10 to generate heat and, therefore, the column 10 is thermally deformed. In addition, calculation of the approximate curve C of the deformed shape of the column 10 and correction values of the saddle 20 will be described with reference to FIG. 4 and FIG. 5 that simplistically show thermal deformation of the sliding face 10a of the column 10.

First, in an inspection point positional information acquisition step, thermal displacement positions of the inspection points are acquired. Therefore, in an inclination variation acquisition step, the inclination variations of the inspection points are acquired. That is, the inclination variation acquisition unit 61 of the inspection point positional information acquisition unit 60 inputs the inclination angles of the column 10 at the displacement points Pa2 and Pb2 as thermally-displaced inclinations from the clinometers 11. Then, the inclination variations of the inspection points are calculated on the basis of differences from the reference inclination acquired before the column 10 is thermally deformed.

Specifically, first, before the column 10 is thermally deformed, the inclination measured at the first inspection point Pa1 is acquired from the memory of the thermal displacement correction device 50. Subsequently, the inclination α measured at the displacement point Pa2 is input from the corresponding clinometer 11. In the present embodiment, because the inclination before the column 10 is thermally deformed is zero, the inclination variation is equal to the inclination α. Thus, as shown in FIG. 5, the inclination variation α is calculated as an angle made with reference to a horizontal line. Note that the inclination variation acquisition unit 61 constantly acquires the inclination variation at the reference inspection point Po as zero.

Subsequently, in a thermal elongation acquisition step, the thermal elongations of the column 10 through thermal deformation are detected. Therefore, the thermal elongation acquisition unit 62 of the inspection point positional information acquisition unit 60 inputs the temperatures measured at the displacement points Pa2, Pb2 and Po from the temperature sensors 12. Furthermore, the thermal elongation acquisition unit 62 acquires the expansion characteristics of the inspection points of the column 10, prestored in the memory of the thermal displacement correction device 50. Then, as shown in FIG. 4, the thermal elongation acquisition unit 62 detects thermal elongations ΔHa and ΔHb between before and after the column 10 is thermally deformed on the basis of the temperatures and expansion characteristics of the displacement points.

Subsequently, in a thermal displacement position calculation step, the positions of the displacement points Pa2, Pb2 and Po in accordance with thermal deformation of the column 10 are calculated. Therefore, the thermal displacement position calculation unit 63 of the inspection point positional information acquisition unit 60 calculates the displacement points Pa2, Pb2 and Po that are thermal displacement positions of the inspection points on the basis of the inclination variations and the thermal elongations.

Here, the thermal displacement position calculation unit 63 approximates the above described inclination variation α at the first inspection point to a displacement angle θ that indicates what direction the first inspection point Pa1 is displaced. As shown in FIG. 5, the displacement angle θ is an angle made between a horizontal line and a straight line that passes through the first inspection point Pa1 and the displacement point Pa2. Then, the displacement ΔZa of the first inspection point Pa1 in the Z direction is obtained on the basis of the displacement angle θ approximated by the inclination variation α and the thermal elongation ΔHa of the first inspection point Pa1. By so doing, the position of the displacement point Pa2 is calculated. Similarly, the position of the displacement point Pb2 that is the thermal displacement position of the second inspection point Pb1 is calculated.

Then, in an approximate curve calculation step, the approximate curve C of the deformed shape of the column 10 is calculated. That is, the approximate curve calculation unit 52 calculates a curve of the second order that passes through all the displacement points Pa2, Pb2 and Po that are the thermal displacement positions of the inspection points. The approximate curve calculation unit 52 sets the calculated curve of the second order as the approximate curve C of the column 10.

In a correction value calculation step, correction values for the command values of the saddle 20 are calculated. Then, the correction value calculation unit 53 first acquires the command position Py of the saddle 20 based on the command values from the control device 50. Subsequently, the correction value calculation unit 53 associates the command position Py of the saddle 20 in the approximate curve C corresponding to the deformed shape of the column 10 to calculate a correction value Rz. Then, in a correction step, the command position is corrected by the correction value. That is, the correction unit 54 corrects the command position output from the control unit 51 with the calculated correction value Rz.

By so doing, for example, the command position for the table 40 is corrected, the workpiece W is further moved by the correction amount Rz in the Z axis direction, and is machined at an appropriate machining position. In this way, the thermal displacement correction device 50 sequentially corrects the thermal displacement of the saddle 20 in accordance with thermal deformation of the column 10 while the machine tool 1 is machined to take measures against thermal fluctuations of the column 10 and a command position of the saddle 20 during machining to perform machining with high accuracy.

### Advantageous Effects of Thermal Displacement Correction Device

With the above described thermal displacement correction device 50 for the machine tool 1, correction values calculated in the correction value calculation unit 53 are calculated from a command position of the saddle 20, corresponding to an approximate curve C, by approximating a deformed shape at the time when the column 10 is thermally deformed because of a thermal effect to the curve. That is, the three inspection points Pa1, Pb1 and Po set on the column 10 are displaced in accordance with thermal deformation of the column 10 due to a thermal effect. Then, the deformed shape of the column 10 is obtained as a curved shape on the basis of the inclination variations and thermal elongations of the inspection points. By so doing, in comparison with the case where the deformed shape of the column 10 is obtained as a linear shape, correction values corresponding to a command position of the saddle 20 supported on the column 10 may be further accurately calculated. Thus, it is possible to handle various displacement conditions due to a thermal effect on the machine tool 1 and to perform thermal displacement correction with further high accuracy.

In addition, the thermal displacement position calculation unit 63 of the inspection point positional information acquisition unit 60 calculates displacement points Pa2 and Pb2 that are thermal displacement positions of the inspection points on the basis of inclination variations and thermal elongations. That is, at the first inspection point Pa1, the inclination variation α is calculated from the difference between the reference inclination and the thermally-displaced inclination that are respectively measured before and after the column 10 is thermally deformed. Then, the thermal displacement position calculation unit 63 approximates the variation α in inclination to a displacement angle θ that indicates what direction the inspection point is displaced. It is possible to calculate what direction and how much the inspection point is displaced in accordance with deformation of the column 10 from the displacement angle θ (≈ variation α in inclination) and the detected thermal elongation of the inspection point. In this way, the thermal displacement positions Pa2 and Pb2 of the inspection points may be calculated further simply.

Then, one of the inspection points set on the column 10 is a support point at which the column 10 is supported on the bed 2 of the machine tool 1. The column 10 is supported on the bed 2 of the machine tool 1 so as to be not movable. That is, when the column 10 is deformed because of a thermal effect on the machine tool 1, the column 10 is thermally deformed with reference to the support point at which the column 2 is supported on the bed 2. Thus, the support point is set as the reference inspection point Po that is not displaced because of a thermal effect. By so doing, it is possible to simplify measurement of the inclination and detection of the thermal elongation at the reference inspection point Po that is the support point.

Furthermore, the inclination variation acquisition unit 61 acquires the thermally-displaced inclination of the reference inspection point Po, that is the support point set as the inspection point, as a constant value. As described above, when the column 10 is thermally deformed, the column 10 is thermally deformed with reference to the support point at which the column 10 is supported on the bed 2. At this time, when the column 10 is thermally deformed in a curved shape, it may be assumed that the normal direction of the reference inspection point Po on the curve that is a deformed shape does not change before and after thermal deformation. By so doing, the thermally-displaced inclination of the reference inspection point Po that is the support point may be regarded as a constant value (zero) before and after the column 10 is thermally deformed. Thus, the inclination variation acquisition unit 61 may omit measurement of the thermally-displaced inclination of that inspection point.

The thermal elongation acquisition unit 62 detects thermal elongations on the basis of the temperatures of the column 10, respectively measured by the temperature sensors 12 arranged at the inspection points. In addition, thermal deformation of the column 10 is caused by thermal expansion of the column 10 due to a thermal effect on the machine tool 1. Then, the thermal elongation of the column 10 in accordance with the thermal deformation is a value based on the temperature and the coefficient of linear expansion of the material. Then, the thermal elongation acquisition unit 62 acquires the expansion characteristics of the column 10 against the temperature, prestored in the memory of the thermal displacement correction device 50. By so doing, it is possible to respectively calculate the thermal elongations of the column 10 on the basis of the temperatures measured by the temperature sensors 12 arranged at the inspection points and the coefficients of linear expansion of the column 10.

The correction value calculation unit 53 calculates a correction value Rz in the drive axis (Z axis) vertical to the direction in which the saddle 20 moves. In the machine tool 1 configured as in the case of the present embodiment, when the column 10 that supports the saddle 20 is deformed because of a thermal effect, the column 10 may be thermally deformed such that the direction in which the saddle 20 moves is curved in the Z axis direction. In such a case, by calculating a correction value Rz in the Z axis direction, the correction unit 54 sets the Z axis, perpendicular to the drive axis (Y axis) along which the saddle 20 is driven, as a correction target, and may correct the command position in the Z axis. In this way, by incorporating the correction value Rz, it is possible to perform appropriate thermal displacement correction.

In addition, a thermal effect on the machine tool 1 is assumed as a thermal effect on the sliding face 10a of the column 10, that occurs because of movement of the saddle 20. The column 10 thermally expands and deforms because of a thermal effect, such as machining with the machine tool 1 and a variation in environment temperature. Particularly, heat generation resulting from movement of the saddle 20 supported by the column 10 significantly influences thermal deformation of the column 10. Then, it is assumed that a thermal effect on the machine tool 1 is a thermal effect on the sliding face 10a of the column 10 on which the saddle 20 moves. By so doing, the deformed shape of the column 10 may be approximated to a curve using the sliding face 10a. Thus, a correction value Rz intended for the sliding face 10a is calculated to make it possible to perform further appropriate thermal displacement correction.

### Second Embodiment

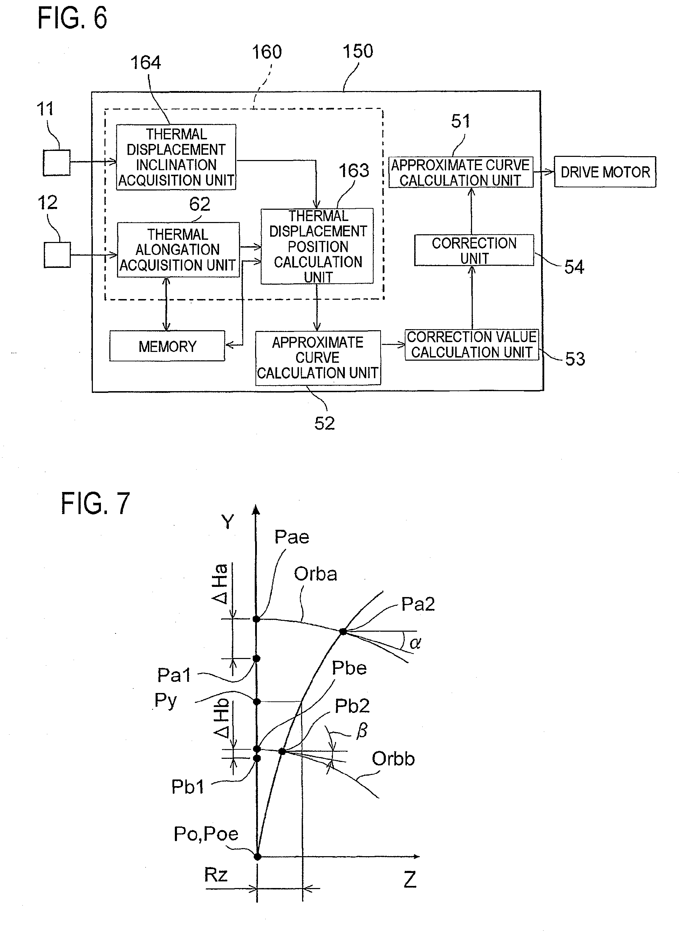

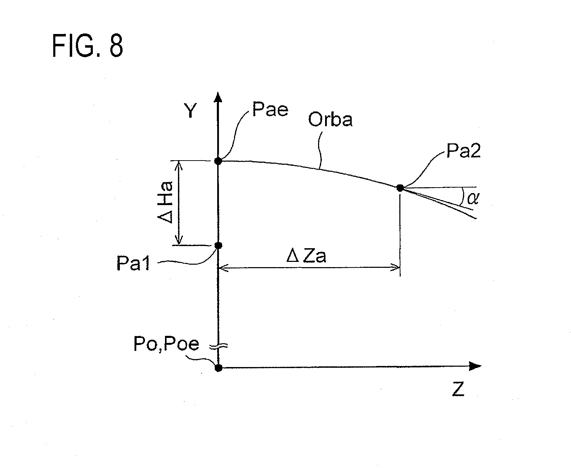

A thermal displacement correction device for a machine tool 1 according to a second embodiment will be described with reference to FIG. 6 to FIG. 8. FIG. 6 is a block diagram that shows a thermal displacement correction device 150. FIG. 7 is an explanatory view of calculation of correction values. FIG. 8 is a partially enlarged view of FIG. 7. Here, the second embodiment differs from the first embodiment in a method of calculating thermal displacement positions of inspection points in the inspection point positional information acquisition step for thermal displacement correction. The other configuration is substantially similar to that of the first embodiment, so the detailed description is omitted.

As shown in FIG. 6, an inspection point positional information acquisition unit 160 of the thermal displacement correction device 150 according to the present embodiment has a thermally-displaced inclination acquisition unit 164, a thermal elongation acquisition unit 62 and a thermal displacement position calculation unit 163. The thermally-displaced inclination acquisition unit 164 is thermally-displaced inclination acquisition means for acquiring thermally-displaced inclinations of inspection points after the column 10 that is the support member is thermally deformed. In addition, the thermal displacement position calculation unit 163 is thermal displacement position calculation means for calculating thermal displacement positions of the inspection points on the basis of displacement trajectories (described later) and thermally-displaced inclinations of the inspection points.

In thermal displacement correction performed by the thermal displacement correction device 150, first, as in the case of the first embodiment, in an inspection point positional information acquisition step, thermal displacement positions of the inspection points are acquired. Therefore, in a thermally-displaced inclination acquisition step, thermally-displaced inclinations of the inspection points are acquired. That is, the thermally-displaced inclination acquisition unit 164 of the inspection point positional information acquisition unit 160 inputs the inclination angles of the column 10 at the displacement points Pa2 and Pb2 from the clinometers 11. In addition, the thermally-displaced inclination acquisition unit 164 constantly acquires the inclination at the reference inspection point Po as zero.

Subsequently, in a thermal elongation acquisition step, the thermal elongations of the column 10 through thermal deformation are detected. Therefore, the thermal elongation acquisition unit 62 of the inspection point positional information acquisition unit 160 inputs the temperatures measured at the displacement points Pa2, Pb2 and Po from the temperature sensors 12. Furthermore, the thermal elongation acquisition unit 62 acquires the expansion characteristics of the inspection points of the column 10, prestored in the memory of the thermal displacement correction device 50. Then, as shown in FIG. 6, the thermal elongation acquisition unit 62 detects thermal elongations ΔHa and ΔHb between before and after the column 10 is thermally deformed on the basis of the temperatures and expansion characteristics of the displacement points.

Subsequently, in a thermal displacement position calculation step, the positions of the displacement points Pa2, Pb2 and Po in accordance with thermal deformation of the column 10 are calculated. Therefore, the thermal displacement position calculation unit 163 of the inspection point positional information acquisition unit 160 acquires displacement trajectories of the first inspection point Pa1 and second inspection point Pb1. Then, the thermal displacement position calculation unit 163 calculates the displacement points Pa2, Pb2 and Po that are thermal displacement positions of the inspection points on the basis of the thermally-displaced inclinations of the inspection points and the acquired displacement trajectories. The displacement trajectories of the inspection points are the trajectories of the inspection points as the column 10 is thermally deformed from a state where the column 10 is not thermally deformed, and each are preset on the basis of a temperature, a thermal elongation, or the like.

As described above, the thermal elongation of the column 10 varies with the coefficient of linear expansion of the material. Therefore, deformed shapes at peripheral portions around the set inspection points in the column 10 may be estimated by the thermal elongations that vary with the temperatures of those portions. Then, the memory of the thermal displacement correction device 50 prestores the displacement trajectories of the inspection points in accordance with thermal deformation of the peripheral portions for thermal elongations. Then, the thermal displacement position calculation unit 163 acquires displacement trajectories Orba and Orbb corresponding to the thermal elongations ΔHa and ΔHb detected by the thermal elongation acquisition unit 62.

Here, the column 10 is thermally deformed in a curved shape because of a thermal effect, so the displacement trajectory of each inspection point also draws a curve similarly. Then, as shown in FIG. 7, the thermal displacement position calculation unit 163 sets point Pae, to which the first inspection point Pa1 is moved by the thermal elongation ΔHa, as the start point of the acquired displacement trajectory Orba. Then, the thermal displacement position calculation unit 163 obtains a position, to which the acquired inclination α of the first inspection point Pa1 is tangent, on the displacement trajectory Orba.

The thermal displacement position calculation unit 163 calculates the thus obtained tangent point as the displacement point Pa2 that is the thermal displacement position of the first inspection point Pa1. Similarly, point Pbe, to which the second inspection point Pb1 is moved by the thermal elongation ΔHb, is set as the start point of the acquired displacement trajectory Orbb, and then a position, to which the inclination of the displacement point Pb2 is tangent, is obtained. By so doing, the position of the displacement point Pb2 that is the thermal displacement position of the second inspection point Pb1 is calculated.

Then, in an approximate curve calculation step, the approximate curve C of the deformed shape of the column 10 is calculated. That is, the approximate curve calculation unit 52 calculates a curve of the second order that passes through all the displacement points Pa2, Pb2 and Po that are the thermal displacement positions of the inspection points. The approximate curve calculation unit 52 sets the calculated curve of the second order as the approximate curve C of the column 10. The following steps in thermal displacement correction are substantially similar to those of the first embodiment, so the description is omitted.

With the above described thermal displacement correction device 50 for a machine tool 1, similar advantageous effects to those of the first embodiment are obtained. In addition, the thermal displacement position calculation unit 163 calculates the displacement points Pa2 and Pb2 that are the thermal displacement positions of the inspection points on the basis of inclinations and displacement trajectories. By so doing, it is possible to calculate the thermal displacement positions of the inspection points with further high accuracy.

### Alternative Embodiments to First and Second Embodiments

In the first and second embodiments, the thermal displacement correction devices 50 and 150 for a machine tool 1 detect the thermal elongations on the basis of the temperatures measured by the temperature sensors 12 arranged at the inspection points in the thermal elongation acquisition step. In contrast to this, it may also be configured such that strain sensors are arranged at the inspection points and the thermal elongations are detected on the basis of strain amounts measured by the strain sensors. The strain sensors may be, for example, strain gauges of which the internal resistance values vary as the column 10 elongates or contracts and that measure strain amounts on the basis of the variations in the resistance values. Then, in the thermal elongation acquisition step, strain amounts in accordance with thermal deformation of the column 10 are measured, and the thermal elongations of the column 10 may be detected on the basis of the strain amounts.

Alternatively, it may also be configured such that range sensors are arranged on the bed 2 of the machine tool 1 and thermal elongations are detected on the basis of distances to the inspection points, measured by the range sensors. When the column 10 is deformed because of a thermal effect on the machine tool 1, the column 10 thermally deforms with reference to the bed 2 on which the column 2 is supported. That is, distances to the displaced inspection points are measured by the range sensors arranged on the reference bed 2 to thereby make it possible to detect the thermal elongations of the column 10 between before and after thermal deformation. In this way, the thermal elongation acquisition step may be configured to detect thermal elongations with various means instead of the temperature sensors 12. In this case as well, similar advantageous effects to those of the first embodiment are obtained.

In addition, in the first and second embodiments, the inspection points are set at three portions in the column 10. In contrast to this, at least four or more inspection points may be set in the column 10 that is the support member. The approximate curve calculation step requires at least three inspection points in order to approximate a deformed shape to a curve because the column 10 is thermally deformed in a curve shape. In addition, when the approximate curve calculation step is, for example, configured to calculate the approximate curve C through the method of least squares, or the like, the approximate curve formed of a curve of the second order may be calculated on the basis of the four or more thermal displacement positions. By so doing, the approximate curve C that is further approximated to the deformed shape of the column 10 may be calculated. Thus, an appropriate correction value Rz may be calculated, so it is possible to perform thermal displacement correction with further high accuracy.

Furthermore, the correction value calculation step may be configured to further calculate a correction value in the drive axis (Y axis) parallel to the direction in which the saddle 20 moves. Here, when the column 10 is thermally deformed such that the direction in which the saddle 20 moves is curved, it may be required to also correct the command position of the saddle 20 based on the command values from the control device 50. In such a case, for example, the correction value Ry in the Y axis is further calculated on the basis of the thermal elongations ΔHa and ΔHb of the inspection points to thereby make it possible to correct the command position in the Y axis that is the direction in which the saddle 20 moves. In this way, the correction value Ry for the direction in which the saddle 20 moves is appropriately incorporated to thereby make it possible to further appropriately perform thermal displacement correction.

In the first and second embodiments, the description is made on the assumption that a thermal effect on the machine tool 1 is a thermal effect on the sliding face 10a of the column 10, that occurs because of movement of the saddle 20. In addition, a thermal effect on the machine tool 1 is conceivably the rotations of the axis motors and spindle motor through machining with the machine tool 1, a variation in environment temperature, heat generation on the sliding faces, or the like. Thus, when the column 10 thermally deforms because of these thermal effects, a reference position used for curve approximation may be appropriately set in the column 10. Thus, measures are taken against various thermal effects, so it is possible to further appropriately perform thermal displacement correction.

In addition, the description is made on the assumption that thermal displacement correction is performed for thermal deformation of the column 10 that is the support member. In contrast to this, as long as a member that supports the tool 33 or the workpiece W and that is thermally displaced because of a thermal effect on the machine tool 1, the thermal displacement correction method of the invention may be applied. Other than that, the machine tool 1 is described by taking the three-axis machining center as an example. In contrast to this, the machine tool 1 may be, for example, five-axis machining center additionally having rotation axes (A and B axes). With the above configuration as well, similar advantageous effects are obtained.

## Claims

1. A thermal displacement correction method for a machine tool, that includes a support member and a movable member that is movably supported by the support member and that moves with respect to the support member on the basis of a command position, **characterized by** comprising:
an inspection point positional information acquisition step of, after the support member is thermally deformed, acquiring thermal displacement positions of at least three inspection points set on the support member;
an approximate curve calculation step of calculating an approximate curve of a deformed shape of the support member after the support member is thermally deformed on the basis of the thermal displacement positions of the inspection points;
a correction value calculation step of calculating a correction value for the command position on the basis of the command position of the movable member and the approximate curve; and
a correction step of correcting the command position of the movable member using the correction value.

2. The thermal displacement correction method for a machine tool according to claim 1, wherein
the inspection point positional information acquisition step includes:
an inclination variation acquisition step of acquiring inclination variations of thermally-displaced inclinations of the inspection points after the support member is thermally deformed with respect to reference inclinations of the inspection points before the support member is thermally deformed;
a thermal elongation acquisition step of acquiring thermal elongations that are thermally-displaced lengths of the support member from a reference position of the support member to the inspection points after the support member is thermally displaced with respect to reference lengths of the support member from the reference position to the inspection points before the support member is thermally deformed; and
a thermal displacement position calculation step of calculating the thermal displacement positions of the inspection points on the basis of the inclination variations and the thermal elongations at the inspection points.

3. The thermal displacement correction method for a machine tool according to claim 1, wherein
the inspection point positional information acquisition step includes:
a thermally-displaced inclination acquisition step of acquiring thermally-displaced inclinations of the inspection points after the support member is thermally deformed;
a thermal elongation acquisition step of acquiring thermal elongations that are thermally-displaced lengths of the support member from a reference position of the support member to the inspection points after the support member is thermally displaced with respect to reference lengths of the support member from the reference position to the inspection points before the support member is thermally deformed; and
a thermal displacement position calculation step of presetting displacement trajectories of the inspection points from a state where the support member is not thermally deformed in accordance with thermal deformation of the support member and calculating the thermal displacement positions of the inspection points on the basis of the displacement trajectories and the acquired thermally-displaced inclinations.

4. The thermal displacement correction method for a machine tool according to claim 1, wherein
one of the inspection points set on the support member is a support point at which the support member is supported on a bed of the machine tool.

5. The thermal displacement correction method for a machine tool according to claim 2 or 3, wherein
one of the inspection points set on the support member is a support point at which the support member is supported on a bed of the machine tool, and
the thermally-displaced inclination of the support point is acquired as a constant value.

6. The thermal displacement correction method for a machine tool according to any one of claims 2, 3 and 5, wherein
in the thermal elongation acquisition step, the thermal elongations are acquired on the basis of temperatures of the support member, measured by temperature sensors arranged at the inspection points.

7. The thermal displacement correction method for a machine tool according to any one of claims 2, 3 and 5, wherein
in the thermal elongation acquisition step, the thermal elongations are acquired on the basis of strain amounts of the support member, measured by strain sensors respectively arranged at the inspection points.

8. The thermal displacement correction method for a machine tool according to any one of claims 2, 3 and 5, wherein
in the thermal elongation acquisition step, the thermal elongations are acquired on the basis of distances to the inspection points, measured by range sensors arranged on a bed of the machine tool.

9. The thermal displacement correction method for a machine tool according to any one of claims 1 to 8, wherein
at least four or more of the inspection points are set on the support member.

10. The thermal displacement correction method for a machine tool according to any one of claims 1 to 9, wherein
in the correction value calculation step, a correction value for the command position in a drive axis vertical to a direction in which the movable member moves is calculated.

11. The thermal displacement correction method for a machine tool according to claim 10, wherein
in the correction value calculation step, a correction value for the command position in a drive axis parallel to the direction in which the movable member moves is further calculated.

12. The thermal displacement correction method for a machine tool according to any one of claims 1 to 11, wherein
a thermal effect on the machine tool is a thermal effect on a sliding face of the support member due to movement of the movable member.

13. A thermal displacement correction device for a machine tool, that includes a support member and a movable member that is movably supported by the support member and that moves with respect to the support member on the basis of a command position, **characterized by** comprising:
inspection point positional information acquisition means for, after the support member is thermally deformed, acquiring thermal displacement positions of at least three inspection points set on the support member;
approximate curve calculation means for calculating an approximate curve of a deformed shape of the support member after the support member is thermally deformed on the basis of the thermal displacement positions at the inspection points;
correction value calculation means for calculating a correction value for the command position on the basis of the command position of the movable member and the approximate curve; and
correction means for correcting the command position of the movable member using the correction value.
